(19) **Europäisches Patentamt**

**European Patent Office**

**Office européen des brevets**

(11) Veröffentlichungsnummer: **0 268 046**

**A2**

(12) **EUROPÄISCHE PATENTANMELDUNG**

(21) Anmeldenummer: **87114345.9**

(22) Anmeldetag: **01.10.87**

(51) Int. Cl.4: **H02M 7/538 , H02M 7/527**

(30) Priorität: **20.11.86 HU 480486**

(43) Veröffentlichungstag der Anmeldung:
**25.05.88 Patentblatt 88/21**

(84) Benannte Vertragsstaaten:
**AT CH DE FR GB IT LI**

(71) Anmelder: **Villamosipari Kutato Intézet
Cservenka Miklos u. 86
H-1601 Budapest(HU)**

(72) Erfinder: **Nagy, László, Dr. Dipl.-Elektroing
Ménesi u. 104
H-1118 Budapest(HU)**
Erfinder: **Németh, Géza
Zöldmezö u. 10
H-1188 Budapest(HU)**
Erfinder: **Prágai, György, Dipl.-Elektroing
Szakasits A. u. 50/b
H-1115 Budapest(HU)**
Erfinder: **Soós, László
Mártirok útja 31 - 33
H-1024 Budapest(HU)**
Erfinder: **Vincze, Zoltán
Korvin Ottó krt. 5
H-2100 Gödöllö(HU)**

(74) Vertreter: **Patentanwälte Viering & Jentschura
Steinsdorfstrasse 6
D-8000 München 22(DE)**

(54) **Verfahren und Schaltungsanordnung zum Regeln und Steuern von Dreiphasenwechselrichtern mit Folgeregelung.**

(57) Das Wesen der Erfindung liegt darin, daß eines der Schaltelemente eines bestimmten Brückenzweiges eines in Brücke geschalteten Dreiphasen-Hauptstromkreis-Stromrichters (8) für eine bestimmte Zeitdauer kontinuierlich eingeschaltet wird und während dieser Zeitdauer für das eingeschaltete Schaltelement und die beiden zu den anderen Brückenzweigen gehörenden Ausgangsspannungen eine Folgeregelung vorgenommen wird, wobei das jeweils eingeschaltete Schaltelement bzw. die für das kontinuierlich eingeschaltete Schaltelement und die beiden zu den anderen Brückenzweigen gehörenden Ausgangsspannungen realisierten Folgeregelungen in einer vorbestimmten Reihenfolge zyklisch gewechselt werden.

Die Schaltungsanordnung enthält einen Dreiphasen-Leitsignalgenerator (1), dessen erster Ausgang über einen Dekoder (6) an den Steuereingang einer logischen Einheit (5), und dessen anderen drei Ausgänge an jeweils eine Folgeregeleinheit (2, 3, 4) angeschlossen sind, die einerseits an die logische Einheit (5), und andererseits jeweils an den ersten Ausgang einer von drei Fühlereinheiten (10, 11, 12) angeschlossen sind, die mit der logischen Einheit (5) über eine Steuereinheit (7), den in Brücke geschalteten Dreiphasen-Hauptstromkreis-Stromrichter (8) und eine Dreiphasen-Filtereinheit (9) verbunden sind und mit ihrem zweiten Ausgang die Ausgangsklemmen der Vorrichtung bilden.

Fig.3

0 268 046

1a.

## Verfahren und Schaltungsanordnung zum Regeln und Steuern von Dreiphasenwechselrichtern mit Folgeregelung

Die Erfindung betrifft ein Verfahren zum Regeln und Steuern von Dreiphasenwechselrichtern mit Folgeregelung sowie eine Schaltungsanordnung zur Realisierung des Verfahrens.

In der Praxis werden Dreiphasenwechselrichter auf zahlreichen Gebieten angewendet, so z.B. in pausenlos arbeitenden Stromversorgungssystemen, Asynchron-Motorantrieben usw.

Die bisher bekannten, zur Regelung und Steuerung dienenden Verfahren weisen zahlreiche Nachteile auf.

Im Sinne des traditionellen Regelungsverfahrens wird eine präferierte, d.h. eine bestimmte Phase oder Linienspannung gleichgerichtet, wonach aus dieser Spannung, durch einen Tiefpaßfilter geleitet, das Meßsignal (Istwert) des Regelstromkreises mit einem grundsätzlich integrierenden Charackter gewonnen wird. Diese Lösung erbringt den Nachteil, daß nur eine einzige Ausgangsspannung überwacht wird, wodurch bei einer asymmetrischen Belastung die Spannungen der drei Phasen weitgehend voneinander abweichen können.

Nach einem anderen, eine gewissermaßen bessere Lösung anbietenden Verfahren werden die Spannungen aller drei Phasen gleichgerichtet und über einen Filter kommt dann das Meßsignal (Istwert) des Regelstromkreises zustande. Bei asymmetrischen Belastungen gibt auch diese Lösung keine befriedigenden Resultate.

Im allgemeinen werden in diesen Wechselrichtern Steuerungen angewendet, die eine Kommutation je Phase oder zwischen den einzelnen Phasen gewährleisten. In der technischen Literatur sind zahlreiche Beispiele für derartige Lösungen aufzufinden (z.B. Cs á ki et al.: "Leistungselektronik"; Heumann-Stumpe: "Tyristortechnik" usw.).

Nach einer weiteren möglichen Lösung kann die Verbindung der Ausgangsklemmen dreier Einphasenwechselrichter um 120° die sich aus den asymmetrischen Belastungen ergebende Spannungsabweichung beseitigt werden; hingegen ist die Typleistung des Ausgangsfilterkreises hoch, das transiente Verhalten ist schlecht bzw. enthält der Hauptstromkreis zu viele Bestandteile.

Bei einer sinusoidalen Ausgangsspannung kann die Typleistung des Ausgangsfilterstromkreises durch die Anwendung eines einen reduzierten Oberwelleninhalt gewährleistenden Verfahrens verringert werden; hingegen muß zur Sicherstellung äußerst guter dynamischer Eigenschaften, zur Eliminierung der sich aus den asymmetrischen Belastungen ergebenden Spannungsasymmetrien bzw. für einen verhältnismäßig einfachen Aufbau ein grundsätzlich abweichendes Steuerungs-Regelungsverfahren verwendet werden.

Durch die Anwendung der Folgeregelung (siehe: Grundsätze der Wirkungsweise von Speise-Wechselrichtern mit sinusoidaler Ausgangsspannung und mit unstetiger Folgeregelung, und HU-PS 181 511) können die Leistungen des Ausgangsfilterstromkreises weitgehend herabgesetzt und die transienten Eigenschaften bedeutend verbessert werden, wobei aber der Hauptstromkreis noch immer im wesentlichen aus drei Einphaseninvertern besteht, d.h. er ist von kompliziertem Aufbau.

Demnach wird durch die Erfindung die Aufgabe gelöst, die Mangelhaftigkeiten der bekannten Verfahren zu vermeiden und zwar durch die Anwendung eines Steuer-Regelungsverfahrens bzw. einer dessen Verwirklichung ermöglichenden Schaltungsanordnung, die einen einfachen Aufbau der Dreiphaseninverter ermöglichen und eine gute dynamische und statische Genauigkeit gewährleisten.

Die Erfindung beruht auf der Erkenntnis, daß - wenn beabsichtigt ist, ein System grundsätzlich mit Folgeregelung auszugestalten - nur ein absolut einfacher Stromrichter für den Dreiphasen-Hauptstromkreis auszubilden erforderlich ist, wenn die Stellglieder der drei Folgeregelstromkreise so gesteuert werden, daß von diesem nur zwei Regelstromkreise gleichzeitig arbeiten und die Regelung lediglich auf zwei Ausgangsphasen oder Linienspannungen erfolgt, während die dritte Phase oder Linienspannung sich als die Differenz der beiden geregelten Spannungen ergibt, wobei das Funktionieren bzw. Verbot der Regelstromkreise mit Hilfe eines logischen Stromkreises zyklisch gesteuert wird.

Demnach bezieht sich die Erfindung auf ein Verfahren zur Steuerung und Regelung von Dreiphaseninvertern mit Folgeregelung, sowie auf die zur Durchführung des Verfahrens geeignete Schaltungsanordnung. Im Sinne der Erfindung wird eines der Schaltungselemente eines bestimmten Brückenzweiges eines in Brücke geschalteten Dreiphasengleichrichters für eine gewisse Zeitdauer - vorzugsweise für die Zeitdauer $\frac{\pi}{3w}$ -

fortlaufend (kontinuierlich) eingeschaltet, während für das eingeschaltete Schaltelement und die beiden zu den beiden anderen Brückenzweigen gehörenden Ausgangsspannungen die Folgeregelungen durchgeführt werden, wobei das für eine bestimmte Periode fortlaufend eingeschaltete Schaltelement bzw. die Durchführung der Folgeregelungen für das kontinuierlich eingeschaltete Schaltelement und die zu den anderen beiden Brückenzweigen gehörenden Ausgangsspannungen nach einer vorbestimmten Reihenfolge zyklisch gewechselt werden.

Die Erfindung wird anhand eines vorteilhaften Ausführungsbeispiels mit Hilfe der Zeichnung näher erläutert; es zeigen:

Fig. 1 eine mögliche Ausführungsform des Stromrichters und des Filterstromkreises zur Erläuterung der Wirkungsweise des erfindungsgemäßen Verfahrens,

Fig. 2 verschiedene, die Wirkungsweise des erfindungsgemäßen Verfahrens erläuternde Symbole,

Fig. 3 das Schema der erfindungsgemäßen Schaltungsanordnung und

Fig. 4 das Schema eines Teils der Schaltungsanordnung.

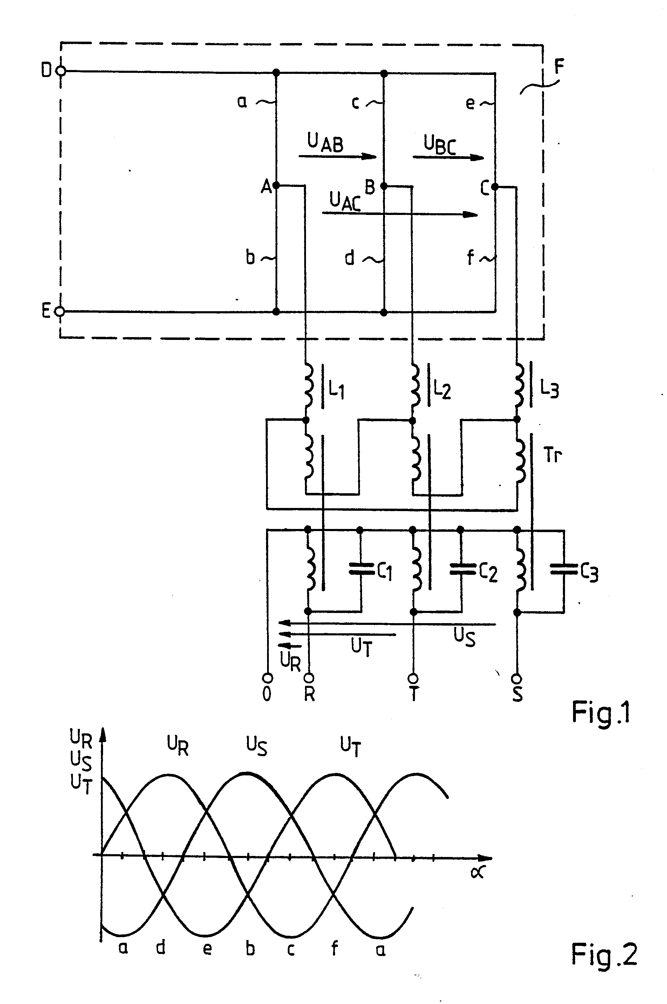

Fig. 1 zeigt ein Ausführungsbeispiel des Wechselrichters und des Ausgangsfilterstromkreises zur Erläuterung der Wirkungsweise des Verfahrens.

Wie aus Fig. 1 ersichtlich, ist der Dreiphasenhauptstromkreis-Stromrichter, der aus den symbolisch mit a-f bezeichneten Schaltelementen aufgebaut ist, in einfachster Weise ausgeführt. Die Eingangsspannung wird an die Klemmen D, E gelegt, während die Brückenzweigpunkte A, B, C mit dem Ausgangstransformator Tr und dem Filterstromkreis-der aus den Drosselspulen $L_1$ -$L_3$ bzw. den Kondensatoren $C_1$ -$C_3$ besteht - verbunden sind.

Für den Betrieb werden sinusoidale Dreiphasen-Leitsignal angenommen, so daß auch die Ausgangssignale sinusförmig sind. Sinngemäß können der Ausgangstransformator Tr bzw. der Filterstromkreis anders ausgestaltet werden, ja sogar können diese in gewissen Fällen weggelassen werden.

Aus den Fig. 1 und 2 ist wohl ersichtlich, daß dann, wenn das Schaltungselement "a" bis 60° kontinuierlich eingeschaltet wird und die Spannungen $U_R(u_{AB})$ und $U_S$ $(U_{AC})$ geregelt werden, sich die Spannung U $_T$ $(U_{BC})$ als die Resultante der Spannung $U_R$ und $U_S$ ergibt.

In den weiteren 120° stellt die Spannung $U_T$ die eine geregelte Spannung dar. Die Spannungen der beiden weiteren Phasen gestalten sich ähnlich wie die als Beispiel erwähnte Phasenspannung $U_T$.

Innerhalb einer Halbperiode wird die Ausgangsspannung bis 120° folgegeregelt, während sich die Ausgangsspannung in dem Bereich 60° als die Resultante der anderen beiden folgegeregelten Spannungen ergibt. Im Hinblick darauf, daß je 60° immer ein anderes Schaltelement kontinuierlich eingeschaltet wird, bestehen die Halbperioden der Ausgangsspannungen aus geregelten und nicht-geregelten Spannungsstrecken der Dauer $\frac{2\pi}{3w}$ bzw. $\frac{\pi}{3w}$.

Das gute transiente Verhalten des Wechselrichters wird durch die angewendete Folgeregelung erreicht, während die Unempfindlichkeit gegenüber den asymmetrischen Belastungen durch das Regeln im größten Teil der Halbperioden der Ausgangsspannungen gewährleistet wird.

In dem hier dargestellten Fall ergibt der letzte Bereich von 60° der Spannungsperioden den nichtgeregelten Spannungsteil; hingegen können durch das Wechseln des bis 60° kontinuierlich eingeschalteten Schaltelementes die Stellen der geregelten und nicht-geregelten Spannungsstrecken innerhalb der Halbperiode geändert werden.

Auf diese Weise kann daher mit Hilfe des erfindungsgemäßen Regelungs-und Steuerungsverfahrens erreicht werden, daß die statische und dynamische Spannungsgenauigkeit sowie die Unempfindlichkeit gegenüber asymmetrischen Belastungen sich optimal gestalten bzw. der Hauptstromkreis einen möglichst einfachen Aufbau aufweist.

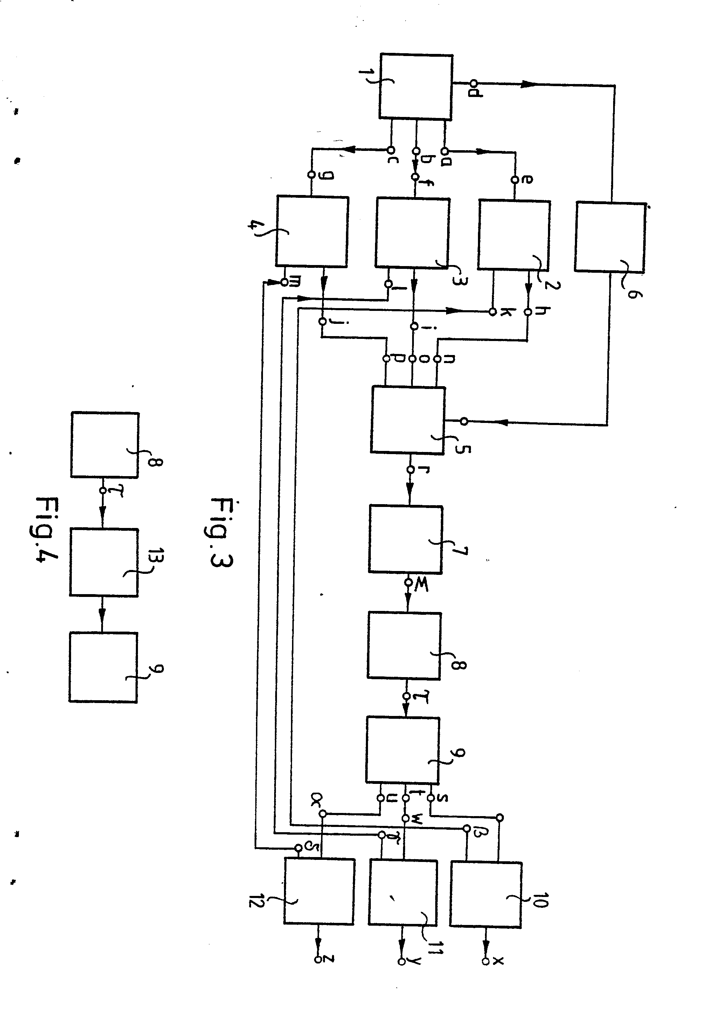

Das Schema der erfindungsgemäßen Schaltungsanordnung ist aus Fig. 3 ersichtlich. Der erste Ausgang "a" des Dreiphasen-Leitsignalgenerators 1 ist an den ersten Eingang "e" einer ersten Folgeregeleinhait 2 von drei Folgeregeleinheiten 2, 3, 4 angeschlossen, während der zweite Ausgang "b" des Dreiphasen-Leitsignalgenerators 1 an den ersten Eingang "f" der zweiten Folgeregeleinheit 3 angeschlossen ist und der dritte Elngang "c" des Leitsignalgenerators 1 mit dem ersten Eingang "g" der dritten Folgeregeleinheit 4 verbunden ist.

Der Ausgang "h" der ersten Folgeregeleinheit 2 ist an den ersten Eingang "n" einer logischen Einheit 5 angeschlossen, während der Ausgang "i" der zweiten Folgeregeleinheit 3 mit dem zweiten Eingang "o" der logischen Einheit 5 verbunden ist und der Ausgang der dritten Folgeregeleinheit 4 an den dritten Eingang "p" der logischen Einheit 5 angeschlossen ist.

Der vierte Ausgang "d" des Dreiphasen-Leitsignalgenerators 1 ist über einen Dekoder 6 an den vierten Eingang "q" der logischen Einheit 5 angeschlossen, während der Ausgang "r" der logischen Einheit 5 über eine Steuereinheit 7 an den einen Eingang Σ eines Dreiphasen-Hauptstromkreis-Stromrichters 8 angeschlossen ist. An den anderen Eingang ƺ des Dreiphasen-Hauptstrom kreis-Stromrichters 8 ist die Speiseeinheit angeschlossen, wobei der Ausgang τ des Stromrichters 8 der dreiphasigen Hauptstromkreises mit dem Eingang einer dreiphasigen Filtereinheit 9 verbunden ist, deren erster Ausgang "s" mit dem Eingang "v" einer ersten Fühlereinheit 10 verbunden ist und deren zweiter Ausgang "t" an den Eingang "w" einer zweiten Filtereinheit 11 angeschlossen ist; der dritte Ausgang "u" der dreiphasigen Filtereinheit 9 ist mit dem Eingang α einer dritten Fühlereinheit 12 verbunden.

Der ersten Ausgang β der ersten Fühlereinheit 10 ist an den zweiten Eingang "k" der ersten Folgeregeleinheit 2 angeschlossen, während der erste Ausgang γ der zweiten Fühlereinheit 11 mit dem zweiten Eingang ℓ der zweiten Folgeregeleinheit 3 verbunden ist und der erste Ausgang δ der dritten Fühlereinheit 12 an den zweiten Eingang "m" der dritten Folgeregeleinheit 4 angeschlossen.

Der zweite Ausgang "x" der ersten Fühlereinheit 10, der zweite Ausgang "y" der zweiten Fühlereinheit 11, sowie der zweite Ausgang "z" der dritten Fühlereinheit 12 bilden die Ausgänge der Dreiphasen-Folgeregeleinheit.

Der Dreiphasen-Leitsignalgenerator 1 der Vorrichtung erzeugt die Signalform, der zu folgen ist und zu der im Laufe des Betriebes ein ähnliches, aber im allgemeinen in der Amplitude abweichendes Signal an dem zweiten Ausgang "x" der ersten Fühlereinheit 10, an dem Ausgang "y" der zweiten Fühlereinheit 11 und an dem zweiten Ausgang "z" der dritten Fühlereinheit 12 erscheint.

Die Vorrichtung arbeitet meistens auf Belastung geschaltet, wobei die eine Klemme der Belastung sinngemäß an den zweiten Ausgang "x" der ersten Fühlereinheit 10, den zweiten Ausgang "y" der zweiten Fühlereinheit 11 und den zweiten Ausgang "z" der dritten Fühlereinheit 12 anzuschließen ist.

An dem Ausgang τ des Dreiphasen-Hauptstromkreis-Stromrichters 8 wird daher das zum Stellglied geleitete Signal von den sonstigen Einheiten des Stromkreises derart beeinflußt, daß die Ausgangssignale der Vorrichtung den Ausgangssignalen (dem ersten Ausgangssignal "a", dem zweiten "b" und dem dritten "c") des Dreiphasen-Leitsignalgenerators 1 ähnlich sind.

Die an dem Ausgang "h" der ersten Folgeregeleinheit 2, an dem Ausgang "i" der zweiten Folgeregeleinheit 3 sowie an dem Ausgang "j" der dritten Folgeregeleinheit 4 erscheinenden Signale befinden sich in einem logischen Zustand, der einen Ein-bzw. Ausschaltbefehl über die logische Einheit 5 und die Steuereinheit 7 zu den bestimmten Schaltelementen des Dreiphasen-Hauptstromkreis-Stromrichters 8 abgeben kann.

An dem vierten Ausgang "d" des Dreiphasen-Leitsignalgenerators 1 erscheinen kodierte Signale, die mit den am ersten Ausgang "a", zweiten Ausgang "b" und dritten Ausgang "c" des Dreiphasen-Leitsignalgenerators erscheinenden Signalen in bestimmten Phasen sind.

Dieses kodierte Signal wird in dem Dekoder 6 dekodiert; das dekodierte Signal, das an den vierten Eingang "q" der logischen Einheit 5 gelegt ist, stellt mit Hilfe der logischen Einheit 5 über die Steuereinheit 7 das kontinuierliche Einschalten eines bestimmten (designierten) Schaltelements des Dreiphasen-Hauptstromkreis-Stromrichters 8 für eine bestimmte Zeitdauer (vorteilhaft $\frac{\pi}{3w}$ ) sicher bzw. neutralisiert das Ausgangssignal der in der Regelung eben nicht teilnehmenden Folgeregeleinheit.

Der Steuereinheit 7 ist die Aufgabe zugeteilt, die Schaltelemente (zweckmäßig Halbleiterschaltelemente) des Dreiphasen-Hauptstromkreis-Stromrichters 8 zu steuern. Der an den Ausgang des Dreiphasen-Hauptstromkreis-Stromrichters angeschlossenen dreiphasigen Filtereinheit 9 ist die Aufgabe zugeteilt, die Grundharminische des an ihrem Eingang ankommenden Erregungssignals zu erzeugen.

An einem als Spannungsgenerator ausgestalteten Ausgang der ersten Fühlereinheit 10, der zweiten Fühlereinheit 11 und der dritten Fühlereinheit 12 -die ihrerseits mit dem ersten Ausgang "s", dem zweiten Ausgang "t" und dem dritten Ausgang "u" der Dreiphasen-Filtereinheit 9 verbunden sind -wird die Spannung wahrgenommen, während an einem stromgeregelten Ausgang der Strom wahrgenommen wird.

Die an dem ersten Ausgang β der ersten Fühlereinheit 10, an dem ersten Ausgang γ der zweiten Fühlereinheit 11 und an dem ersten Ausgang δ der dritten Fühlereinheit 12 vorhandenen Signale sind Informationssignale für die Folgeregeleinheiten über die Ausgangssignale.

In der Praxis besteht oft die Notwendigkeit, die Ausgangsspannung auf den entsprechenden Pegel umzuwandeln.

Fig. 4 stellt einen möglichen Fall der Transformierung bzw. Umwandlung der Ausgangsspannungen auf einen beliebigen Pegel dar.

Zu diesem Zweck ist· zwischen den Ausgang des Dreiphasen-Hauptstromkreis-Stromrichters 8 und der dreiphasigen Filtereinheit 9 eine Dreiphasentransformator-Einheit 13 einzuschalten.

Die Vorteile unserer Erfindung können wie folgt zusammengefaßt werden:
-mit Hilfe des erfindungsgemäßen Verfahrens kann der Hauptstromkreis in einfachster Weise aufgebaut werden, für die Ausgangssignale wird eine hohe statische und dynamische Genauigkeit erreicht und eine hochgradige Unempfindlichkeit gegenüber asymmetrischen Belastungen ist sichergestellt.
-die das erfindungsgemäße Verfahren realisierende Schaltungsanordnung weist einen einfachen Aufbau auf; sie enthält nur an sich bekannt, verhältnismäßig einfach realisierbare Einheiten.

## Ansprüche

1. Verfahren zum Regeln und Steuern von Dreiphasenwechselrichtern mit Folgeregelung, dadurch gekennzeichnet, daß eines der Schaltelemente eines bestimmten Brückenzweiges eines in Brücke geschalteten Dreiphasen-Hauptstromkreis-Stromrichters (8) für eine bestimmte Zeitdauer kontinuierlich eingeschaltet gehalten wird und während dieser Zeitdauer für das eingeschaltete Schaltelement und die beiden, zu den anderen Brückenzweigen gehörenden Ausgangsspannungen Folgeregelungen durchgeführt werden, wobei das eingeschaltete Schaltelement bzw. die Durchführung der Folgeregelungen für das kontinuierlich eingeschaltete Schaltelement und die beiden zu den anderen Brückenzweigen gehörenden Ausgangsspannungen nach einer vorbestimmten Reihenfolge zyklisch gewechselt werden.

2. Verfahren zum Regeln und Steuern von Wechselrichtern mit beliebiger Phasenzahl mit Folgeregelung, dadurch gekennzeichnet, daß das (die) einem oder mehreren bestimmten Brückenzweigen eines in Brücke geschalteten Hauptstromkreis-Stromrichters entsprechende(n) Schaltelement(e) - wobei die Zahl der Brückenzweige der Phasenzahl entspricht-eine Zeit lang kontinuierlich eingeschaltet wird (werden) und während dieser Zeitspanne für dieses Schaltelement bzw. diese Schaltelemente sowie für die zu den sonstigen Brückenzweigen gehörenden Ausgangsspannungen die Folgeregelung vorgenommen wird, wonach das bzw. die für eine gewisse Zeitspanne eingeschaltete(n) Schaltelement(e) bzw. die für die zu dem (den) fortlaufend eingeschalteten Schaltelement(en) und den sonstigen Brückenzweigen gehörenden Ausgangsspannungen realisierten Folgeregelungen nach einer vorbestimmten Reihenfolge zyklisch gewechselt werden.

3. Schaltungsanordnung zur Regelung von Dreiphasen-Wechselrichtern mit Folgeregelung, mit einem Dreiphasen-Leitsignalgenerator (1), dessen erster Ausgang an einen ersten Eingang einer Folgeregeleinheit (2) angeschlossen ist, einer Steuereinheit (7), deren Ausgang an den einen Eingang eines Dreiphasen-Hauptstromkreis-Stromrichters (8) angeschlossen ist, während der andere Eingang des Dreiphasen-Hauptstrom kreis-Stromrichters (8) mit einer Speiseeinheit verbunden ist und der Ausgang des Stromrichters (8) an den Eingang einer Dreiphasen-Filtereinheit (9) angeschlossen ist, dadurch gekennzeichnet, daß der zweite Eingang (b) des Dreiphasen-Leitsignalgenerators (1) an den ersten Eingang (f) einer zweiten Folgeregeleinheit (3) angeschlossen ist, der dritte Ausgang (c) des Dreiphasen-Leitsignalgenerators (1) mit dem ersten Eingang (h) einer dritten Folgeregeleinheit (4) verbunden ist, der vierte Ausgang (d) des Dreiphasen-Leitsignalgenerators (1) über einen Dekoder (6) an den vierten Eingang (q) einer logischen Einheit (5) angeschlossen ist, der Ausgang (h) der ersten Folgeregeleinheit (2) an den ersten Eingang (n) der logischen Einheit (5) angeschlossen ist, während der Ausgang (i) der zweiten Folgeregeleinheit (3) mit dem zweiten Eingang (o) der logischen Einheit (5) verbunden ist und der Ausgang (j) der dritten Folgeregeleinheit (4) an den dritten Eingang (p) der logischen Einheit (5) angeschlossen ist, und daß der erste Ausgang (s) der Dreiphasen-Filtereinheit (9) mit dem Eingang (v) der ersten Fühlereinheit (10) verbunden ist, der zweite Ausgang (t) der Dreiphasen-Filtereinheit (9) an den Eingang (w) einer zweiten Fühlereinheit (11) angeschlossen ist, der dritte Ausgang (u) der Dreiphasen-Filtereinheit (9) mit dem Eingang ($\alpha$) einer dritten Fühlereinheit (12) verbunden ist, der erste Ausgang ($\beta$) der ersten Fühlereinheit (10) an den zweiten Eingang (k) der ersten Folgeregeleinheit (2) angeschlossen ist, während der ersten Ausgang ($\gamma$) der zweiten Fühlereinheit (11) mit dem zweiten Eingang ($\iota$) der zweiten Folgeregeleinheit (3) verbunden ist und der erste Ausgang ($\delta$) der dritten Fühlereinheit (12) an den zweiten Eingang (m) der dritten Folgeregeleinheit (4) angeschlossen ist, wobei der zweite Ausgang (x) der ersten Fühlereinheit (10), der zweite Ausgang (y) der zweiten Fühlereinheit (11) und der zweite Ausgang (z) der dritten Fühlereinheit (12) die Ausgangsklemmen der Vorrichtung bilden.

4. Schaltungsanordnung nach Anspruch 3, dadurch gekennzeichnet, daß der Ausgang ($\tau$) des Dreiphasen-Hauptstromkreis-Stromrichters (8) an den Eingang der Dreiphasen-Filtereinheit (9) über eine dreiphasige Transformatoreinheit (13) angeschlossen ist.

Fig.1

Fig.2

Fig. 3

Fig. 4